# EUROPEAN PATENT SPECIFICATION

(11) **EP 3 333 399 B1**
(45) Date of publication and mention of the grant of the patent: **17.02.2021**
(21) Application number: 17201612.3
(22) Date of filing: 14.11.2017
(51) Int. Cl.: F02F 3/00, B23K 101/00

(54) **PISTON FOR VEHICLE ENGINE AND METHOD FOR MANUFACTURING THE SAME**
KOLBEN FÜR FAHRZEUGMOTOR UND VERFAHREN ZUR HERSTELLUNG DAVON
PISTON POUR MOTEUR DE VÉHICULE ET SON PROCÉDÉ DE FABRICATION

(30) Priority: 08.12.2016 KR 20160166492
(43) Date of publication of application: 13.06.2018
(73) Proprietor: Dong Yang Piston Co., Ltd., Gyeonggi-do 425-838 (KR)
(72) Inventor: YANG, Jun-Gyu, Seoul (KR); RYU, Gwan-Ho, Ansan-si, Gyeonggi-do (KR); LEE, Jeong-Geun, Incheon (KR); SEON, Joo-Hyeon, Incheon-si (KR); PARK, Sang-Bin, Siheung-si, Gyeonggi-do (KR); JI, Jeong-Hoon, Ansan-si, Gyeonggi-do (KR)
(74) Representative: BCKIP

(56) References cited:
- EP-A2- 1 052 435
- WO-A1-2007/093289
- WO-A1-2017/085061
- CN-A- 104 801 847
- DE-A1-102008 038 325

## Description

### CROSS-REFERENCE TO RELATED APPLICATION(S)

This application claims benefit of priority to Korean Patent Application No. 10-2016-0166492 filed on Dec. 8, 2016 in the Korean Intellectual Property Office.

### BACKGROUND

### 1. FIELD

The present disclosure relates to a piston for a vehicle engine and a method for manufacturing the same, and more particularly, to a piston for a vehicle engine, which has a cooling gallery formed therein, and a method for manufacturing the same.

### 2. DESCRIPTION OF RELATED ART

The internal combustion engine of a vehicle includes a piston made of steel. The piston has a cooling gallery that rapidly cools high-temperature heat generated during a fuel combustion process, in order to prevent a damage of the piston.

In order to form the cooling gallery, an upper piston part having a valve pocket and combustion cavity formed therein and a lower piston part having a piston skirt and piston pin hole formed therein are separately manufactured and welded to each other.

Examples of the method for welding the upper and lower piston parts to each other may include friction welding, brazing and the like.

US Patent Registration No. 6,260,472 discloses a process of manufacturing a steel piston through friction welding. However, during a process of welding upper and lower piston parts through friction welding, flashing may be formed and remain in a cooling gallery, thereby disturbing a fluid flow in the cooling gallery.

US Patent Registration No. 8,991,046 discloses a process of manufacturing a steel piston through brazing bonding. According to this process, heating and cooling are performed in a sealed chamber. Thus, the productivity of the process is inevitably degraded.

WO 2017/085061, being a prior art under Article 54(3) EPC, relates to a piston for internal combustion engines, consisting of a bottom part and a top part, wherein the piston comprises at least one upper joining plane passing through the outer circumference of the piston, and/or at least one lower joining plane not passing through the outer circumference of the piston, and at least one solder gap arranged at least in one sub-region of the at least one joining plane.

DE 10 2008 038 325 A1 relates to a method for attaching a ring element to a piston for an internal combustion engine, in which the ring element is screwed onto the piston body by a thread applied to the radially outer surface of a part of the piston crown.

### SUMMARY

An object of the present disclosure is to provide a piston for a vehicle engine and a method for manufacturing the same, which can improve productivity.

According to an embodiment of the present disclosure, a method for manufacturing a piston for a vehicle engine includes a method according to claim 1.

The locking part may be formed in any one of the first and second piston parts, and protrude to cover a portion of the piston part where the locking part is not formed.

The locking part may be disposed at a circumference adjacent to a first bonding surface disposed near the center of the first or second piston part, between the pair of bonding surfaces formed on the first or second piston part, and protrude in a direction crossing a plane formed by the bonding surface.

The locking part may be disposed at a circumference adjacent to a second bonding surface separated from a first bonding surface disposed near the center of the first or second piston part, between the pair of bonding surfaces formed on the first or second piston part, and protrude in a direction crossing a plane formed by the bonding surface.

A first rounded portion having a predetermined radius of curvature may be formed between the locking part and the first or second bonding surface, and a cut portion formed in an oblique direction or a second rounded portion having a predetermined radius of curvature may be formed at a corner portion of the piston part which faces the first rounded portion and has no locking part formed thereon.

The second rounded portion may have a larger radius of curvature than the first rounded portion.

The locking part may be separable from the first and second piston parts, the locking part may include a locking part body formed in a ring shape and having may have through-hole formed therein, the locking part body has an outer diameter corresponding to the inner diameter of first and second piston-side bonding surface circumferences, wherein the first piston-side bonding surface circumference is adjacent to a bonding surface disposed near the center between the bonding surfaces of the first piston part, and the second piston-side bonding surface circumference is adjacent to a bonding surface disposed near the center between the bonding surfaces of the second piston part, and the outer circumferential surface of the locking part may be in contact with the first and second piston-side bonding surface circumferences at the same time, with the locking part disposed in the piston assembly.

With the locking part mounted on the piston assembly, the locking part is disposed in the combustion cavity, one surface of the locking part body may be disposed in parallel to one surface of the first piston part, and the other surface of the locking part body may be supported by the second piston part.

The piston diffusion brazing step may be performed in a piston manufacturing device which includes a partially opened heating zone, a heater for providing heat into the heating zone, and a moving unit moved in one direction in the heating zone. In the piston diffusion brazing step, the piston assembly may be heated while being moved at a predetermined speed through the heating zone in the one direction by the moving unit.

The piston diffusion brazing step may include: a preheating step of heating the piston assembly formed at room temperature to a preheating temperature from the room temperature, the preheating temperature being lower than the melting temperature of the bonding member; and a main heating step of diffusion brazing the first piston part, the bonding member and the second piston part of the piston assembly by heating the piston assembly heated to the preheating temperature through the preheating step at a main heating temperature higher than the melting temperature of the bonding member.

The second piston part may include a piston skirt and a piston pin hole, and the plurality of piston assemblies each including the first piston part, the bonding member and the second piston part, which are sequentially stacked, may be successively moved by the moving unit.

According to another embodiment of the present disclosure, a piston for a vehicle engine is manufactured by a method for manufacturing a piston for a vehicle engine, including: a piston assembling step of forming a piston assembly by assembling a first piston part, a bonding member and a second piston part, wherein the first piston part has two or more bonding surfaces separated from each other and extended in a circumferential direction, and the second piston part has two or more bonding surfaces separated from each other and extended in the circumferential direction; a piston diffusion brazing step of diffusion brazing the first piston part, the bonding member and the second piston part under an open atmosphere by heating the formed piston assembly; and a piston cooling step of cooling a piston unit formed by diffusion brazing the first piston part, the bonding member and the second piston part. The piston assembly includes a locking part for maintaining a position at which the first and second piston parts are assembled, and the method further comprises a locking part removing step of removing the locking part from the cooled piston unit

According to the embodiments of the present disclosure, since the piston for a vehicle engine and the method for manufacturing the same can improve the productivity, a large quantity of pistons for a vehicle engine can be manufactured at a lower cost for a shorter time.

### BRIEF DESCRIPTION OF DRAWINGS

FIG. 1 illustrates a cross-section of a piston for a vehicle engine according to an embodiment of the present disclosure.
FIG. 2 illustrates a state before upper and lower piston parts of the piston of FIG. 1 are assembled.
FIG. 3 illustrates a piston assembly in which the upper piston part, the lower piston part and a bonding member of FIG. 2 are assembled.
FIG. 4 is an expanded view of a portion VI of FIG. 3.
FIG. 5 illustrates the bonding member of FIG. 1.
FIG. 6 illustrates a process in which the piston assembly of FIG. 3 is diffusion brazed in a piston manufacturing device.
FIG. 7 illustrates an internal temperature distribution of the piston manufacturing device of FIG. 6.
FIG. 8 is a cross-sectional view illustrating that the piston assembly is held by a jig when the piston assembly is seated in the piston manufacturing device of FIG. 6.
FIGS. 9A and 9B illustrate the metal texture sizes of the piston before and after the piston manufacturing process by the piston manufacturing device of FIG. 6.
FIG. 10 is a cross-sectional views illustrating the cooling gallery of the piston unit formed by diffusion brazing the piston assembly in the piston manufacturing device of FIG. 6.
FIG. 11 is an expanded view of a portion XI of FIG. 10.
FIG. 12 illustrates a method for manufacturing a piston for a vehicle engine according to an embodiment of the present disclosure.
FIG. 13 illustrates that a piston assembly is assembled during a process of manufacturing a piston for a vehicle engine through a method for manufacturing a piston for a vehicle engine according to another embodiment of the present disclosure.
FIG. 14 illustrates that a piston assembly is assembled during a process of manufacturing a piston for a vehicle engine through a method for manufacturing a piston for a vehicle engine according to still another embodiment of the present disclosure.
FIG. 15 is an expanded view of a portion XV of FIG. 14.
FIG. 16 illustrates that a piston assembly is assembled during a process of manufacturing a piston for a vehicle engine through a method for manufacturing a piston for a vehicle engine according to still another embodiment of the present disclosure.
FIG. 17 illustrates that a piston assembly is assembled during a process of manufacturing a piston for a vehicle engine through a method for manufacturing a piston for a vehicle engine according to still another embodiment of the present disclosure.

### DETAILED DESCRIPTION

Hereinafter, embodiments of the present disclosure will be described with reference to the accompanying drawings, such that this disclosure will be thorough and complete and fully convey the scope of the present disclosure to those skilled in the art.

The present disclosure may be implemented in various manners, and is not limited to embodiments described herein. In the drawings, components which are not related to the descriptions are omitted in order to clearly describe the present disclosure. Throughout the specification, like reference numerals refer to like components. Furthermore, since the sizes and thickness of components in the drawings are arbitrarily set for convenience of description, they are not limited to the drawings.

In the present disclosure, "over/on" indicates that an element is positioned over or under a target member, and does not necessarily indicate that the element is positioned over/on the target member based on the direction of gravity. Throughout the specification, when an element is referred to as "including" a component, it may indicate that the element does not exclude another component but can include another component, unless referred to the contrary.

Hereafter, a piston for a vehicle engine and a method for manufacturing the same according to embodiments of the present disclosure will be described in detail with reference to the accompanying drawings.

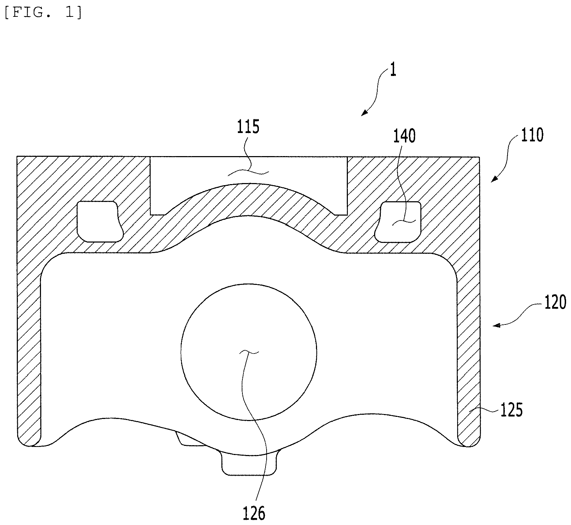

FIG. 1 illustrates a cross-section of a piston for a vehicle engine according to an embodiment of the present disclosure.

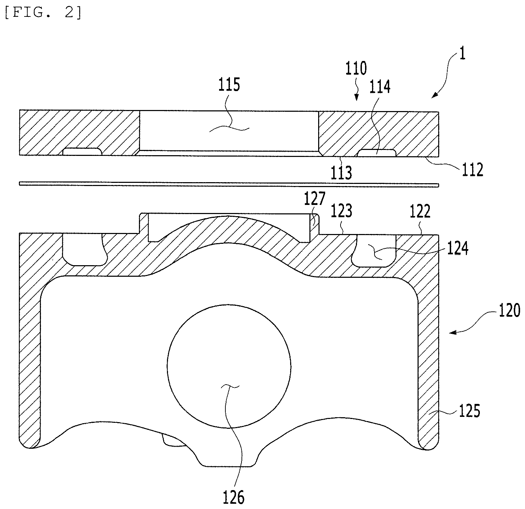

Referring to FIG. 1, the piston 1 for an engine vehicle according to the embodiment of the present disclosure includes a piston body 100 formed by diffusion brazing first and second piston parts 110 and 120 (refer to FIG. 2) to each other, the first and second piston parts 110 and 120 being made of forged steel such as precipitation-hardened ferrite-pearlite steel (AFP steel) or heat treated steel such as 42CrMo₄. The piston body 100 has a cooling gallery 140 formed in the top thereof, the cooling gallery 140 serving to cool high-temperature heat generated through a combustion process in a cylinder. The piston body 100 has a pin hole 126 formed at the bottom thereof, such that a piston skirt 125 and a piston pin (not illustrated) are housed in the pin hole 126.

In order to form the cooling gallery 140 of the piston 1 for a vehicle engine according to the embodiment of the present disclosure, each of the first and second piston parts 110 and 120 has a plurality of bonding surfaces formed thereon, and the bonding surfaces of the first and second piston parts 110 and 120, facing each other, are bonded to form the cooling gallery 140 in the piston body 100.

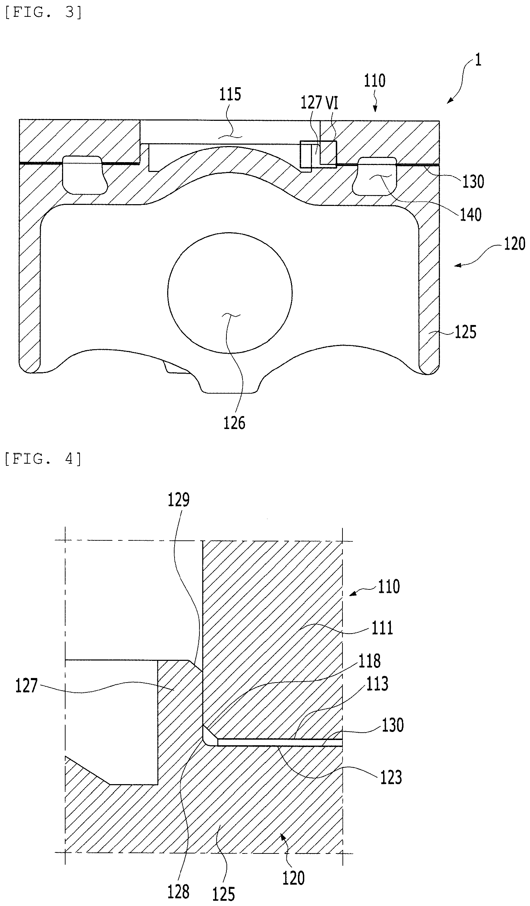

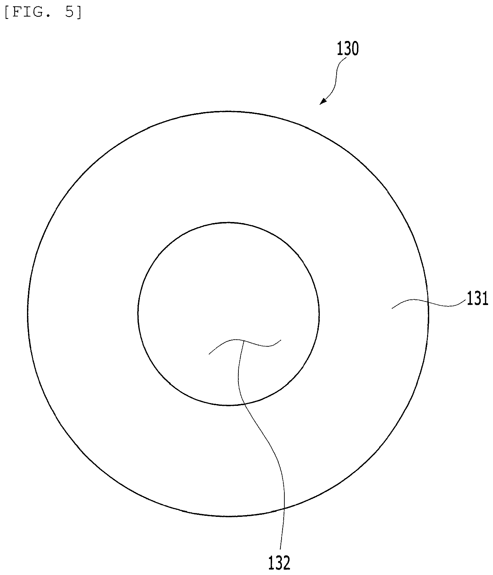

FIG. 2 illustrates a state before upper and lower piston parts of the piston for the vehicle engine of FIG. 1 are assembled, and FIG. 3 illustrates a piston assembly in which the upper piston part, the lower piston part and a bonding member of FIG. 2 are assembled. FIG. 4 is an expanded view of a portion VI of FIG. 3, and FIG. 5 illustrates the bonding member of FIG. 1.

Referring to FIGS. 2 to 5, the first piston part 110 forms the upper portion of the piston 1, a combustion cavity 115 is formed in the center of the first piston part 110, and first and second bonding surfaces 112 and 113 extended in the circumferential direction and separated from each other are formed on the bottom surface of the first piston part 110. Between the first and second bonding surfaces 112 and 113, a first groove 114 is formed. The second bonding surface 113 is disposed at an inner position closer to the center of the first piston part 110 than the first bonding surface 112.

The second piston part 120 forms the lower portion of the piston 1, and the piston skirt 125 and the piston pin hole 126 are formed in the second piston part 120.

Like the first piston part 110, the second piston part 120 has third and fourth bonding surfaces 122 and 123 formed at the top surface thereof, the third and fourth bonding surfaces 122 and 123 being extended in the circumferential direction and separated from each other. Between the third and fourth bonding surfaces 122 and 123, a second groove 124 is formed. The fourth bonding surface 123 is disposed at an inner position closer to the center of the second piston part 120 than the third bonding surface 122.

Furthermore, a locking part 127 protrudes upward from the edge of the third bonding surface 122, which is separated from the second groove 124. The locking part 127 is formed along the circumferential direction or formed in a ring shape. The locking part 127 has an outer diameter corresponding to the diameter of the combustion cavity 115 formed through the center of the first piston part 110.

With the first and second piston parts 110 and 120 assembled to each other before diffusion brazing, the locking part 127 of the second piston part 120 may be inserted into the combustion cavity 115 of the first piston part 110 so as to cover a portion of the first piston part 110 or specifically the inner circumference of the first piston part 110, which makes it possible to maintain the state in which the first and second piston parts 110 and 120 are matched with each other.

Meanwhile, the first piston part 110 has a first cut portion 118 which is obliquely formed at the inner circumference thereof, that is, at the inner end of the second bonding surface 113, and a rounded portion 128 having a predetermined curvature radius of 0.2 mm to 0.7 mm, for example, is formed at the connection between the locking part 127 and the fourth bonding surface 123 of the second piston part 120. Furthermore, the locking part 127 has a second cut portion 129 formed at the upper end thereof, the second cut portion 129 being obliquely formed toward the inner circumference of the first piston part 110.

The first cut portion 118, the second cut portion 129 and the rounded portion 128 can prevent an interference between the first and second piston parts 110 and 120 during an assembling process. Thus, an assembling and diffusion brazing process between the first and second piston parts 110 and 120 can be smoothly performed.

In the present embodiment, it has been described that the locking part 127 is formed in the second piston part 120. However, the locking part 127 may be formed in the first piston part 110, or formed at the outer circumference of the first or second piston part 110 or 120.

With the first and second piston parts 110 and 120 assembled to each other before diffusion brazing, a bonding member 130 is disposed between the first and second piston parts 110 and 120.

The bonding member 130 includes a bonding member body 131 formed in a circular plate shape, and has a through-hole 132 formed in the center of the bonding member body 131. The bonding member 130 may be formed of a nickel-based alloy, for example. In the present embodiment, the bonding member 130 may be formed of a tertiary nickel filler metal. For example, the bonding member 130 may be provided as a metal thin film with a thickness of 50um to 200um.

The bonding member body 131 has a diameter corresponding to the diameter of the bottom surface of the first piston part 110 or the top surface of the second piston part 120, and the through-hole 132 has a diameter corresponding to the diameter of the locking part 127 formed in the second piston part 120. Therefore, with the first piston part 110, the bonding member 130 and the second piston part 120 assembled to form a piston assembly, an arrangement interference between the bonding member 130 and the locking part 127 can be suppressed.

When the first piston part 110, the bonding member 130 and the second piston part 120 are assembled to form the piston assembly, one surface of the bonding member 130 is in contact with the first and second bonding surfaces 112 and 113 of the first piston part 110, and the other surface of the bonding member 130 is in contact with the third and fourth bonding surfaces 122 and 123 of the second piston part 120. The first and second bonding surfaces 112 and 113 face the third and fourth bonding surfaces 122 and 123, respectively, with the bonding member 130 interposed therebetween. Between the first groove 114 of the first piston part 110 and the second groove 124 of the second piston part 120, a portion of the bonding member 130 is positioned.

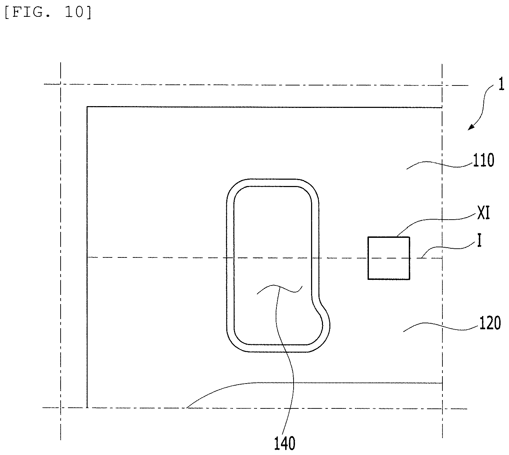

When the bonding surfaces 112 and 113 and the bonding surfaces 122 and 123 are joined to each other by heating and diffusion brazing the first piston part 110, the bonding member 130 and the second piston part 120, the first groove 114 of the first piston part 110 and the second groove 124 of the second piston part 120 form the cooling gallery 140. At this time, the portion of the bonding member 130, which had been disposed between the first and second grooves 114 and 124, may be diffused to the inside of the cooling gallery 140, thereby forming a diffusion layer 150 (refer to FIG. 10) on the inner surface of the cooling gallery 140, the diffusion layer 150 containing a heterogeneous metal, for example, a nickel-based alloy.

Hereafter, a process of manufacturing the piston 1 according to the embodiment of the present disclosure will be described in detail.

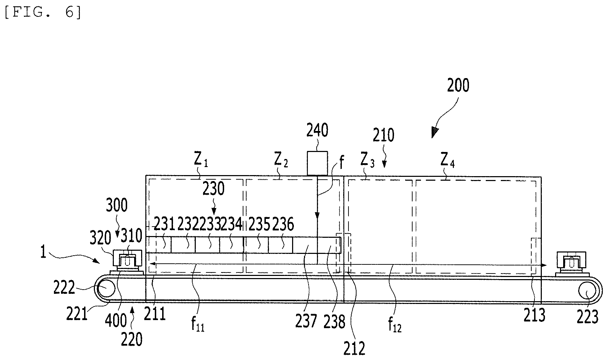

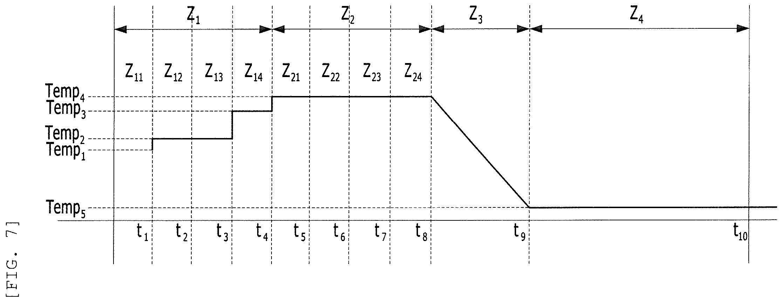

FIG. 6 illustrates a process in which the piston assembly of FIG. 3 is brazed in a piston manufacturing device, and FIG. 7 illustrates an internal temperature distribution of the piston manufacturing device of FIG. 6.

In the following descriptions, the piston assembly indicates a state in which the first piston part 110, the bonding member 130 and the second piston part 120 are assembled to each other before diffusion brazing, and a piston unit indicates a state in which the first and second piston parts 110 and 120 of the piston assembly are joined to each other in the piston manufacturing device 200 (refer to FIG. 6) through a heating process.

Referring to FIGS. 6 and 7, the piston manufacturing device 200 for manufacturing the piston 1 according to the present embodiment includes a manufacturing device body 210, a heater 230 and a moving unit 220. The manufacturing device body 210 includes a heating zone Z₁ and Z₂ and a cooling zone Z₃ and Z₄ which are partially opened, the heater 230 provides heat to the heating zone Z₁ and Z₂, and the moving unit 220 is moved in one direction through the heating zone Z₁ and Z₂ and the cooling zone Z₃ and Z₄, with the piston assembly seated on the moving unit 220.

The heating zone Z₁ and Z₂ communicates with the outside of the piston manufacturing device 200 through a first opening 211 so as to form an open atmosphere, and communicates with the cooling zone Z₃ and Z₄ through a second opening 212. That is, the heating zone Z₁ and Z₂ are formed as a heating furnace which is partially opened.

At this time, the first and second openings 211 and 212 may be formed so as not to open the entire heating zone Z₁ and Z₂. In other words, the first and second openings 211 and 212 may partially open the heating zone Z₁ and Z₂ such that the moving unit 220 and the piston assembly can be moved.

The heating zone Z₁ and Z₂ includes a preheating zone Z₁ and a main heating zone Z₂ which communicate with each other. The preheating zone Z₁ is located at the front of the heating zone Z₁ and Z₂ or located adjacent to the first opening 211, and the main heating zone Z₂ may be disposed at the rear of the preheating zone Z₁.

The preheating zone Z₁ includes a plurality of sub preheating zones Z₁₁ to Z₁₄ disposed in the moving direction of the moving unit 220.

Similarly, the main heating zone Z₂ includes a plurality of sub main heating zones Z₂₁ to Z₂₄ disposed in the movement direction of the moving unit 220.

The heater 230 provides high-temperature heat generated by electricity or combustion to the heating zone Z₁ and Z₂, and includes a plurality of heating units 231 to 238. The piston assemblies moved at a predetermined speed through the heating zone Z₁ and Z₂ may be successively preheated by the heat supplied from the heater 230, and then brazed.

At this time, the plurality of heating units 231 to 238 may be arranged in the plurality of sub preheating zones Z₁₁ to Z₁₄ and the plurality of sub main heating zones Z₂₁ to Z₂₄, respectively, and each of the heating units 231 to 238 may provide a different amount of heat from the other heating units, such that the internal temperatures of the sub preheating zones Z₁₁ to Z₁₄ and the sub main heating zones Z₂₁ to Z₂₄ are different from one another. The sub preheating zones Z₁₁ to Z₁₄ and the sub main heating zones Z₂₁ to Z₂₄ may have the same length in one direction or specifically in the movement direction of the moving unit 220. Therefore, while the piston assembly is moved by the moving unit 220, the piston assembly stays in each of the sub preheating zones Z₁₁ to Z₁₄ and the sub main heating zones Z₂₁ to Z₂₄ for the same time.

In the present embodiment, the internal temperature of the first sub preheating zone Z₁₁ of the sub preheating zones Z₁₁ to Z₁₄ may be set to a first preheating temperature Temp₁, the internal temperature of the second sub preheating zone Z₁₂ may be set to a second preheating temperature Temp₂, the internal temperature of the third sub preheating zone Z₁₃ may be set to the second preheating temperature Temp₂, and the internal temperature of the fourth sub preheating zone Z₁₄ may be set to a third preheating temperature Temp₃.

The first to third preheating temperatures Temp₁ to Temp₃ have a relation of Temp₁ < Temp₂ < Temp₃. The first to third preheating temperatures Temp₁ to Temp₃ are lower than the melting temperature of the bonding member 130, and the third preheating temperature Temp₃ is close to the melting temperature of the bonding member 130.

For example, the first preheating temperature Temp₁ may range from 500°C to 800°C, and the second and third preheating temperatures Temp₂ and Temp₃ may range from 800°C to 1,200°C.

That is, since the piston assembly is preheated in the preheating zones Z₁₁ to Z₁₄, the temperature of the entire area of the bonding member 130 assembled to the piston assembly may uniformly rise to a temperature close to the melting temperature.

Meanwhile, the internal temperatures of the respective sub main heating zones Z₁₁ to Z₁₄ are uniformly maintained at a main heating temperature Temp₄. At this time, the main heating temperature Temp₄ is higher than the melting temperature of the bonding member 130, and may range from 1, 000°C to 1, 300°C, for example.

In the present embodiment, the bonding member 130 may be made of a tertiary nickel filler metal. In this case, the melting temperature of the bonding member 130 may range from 950°C to 1,070°C, for example. The first to third preheating temperatures Temp₁ to Temp₃ are set to lower temperatures than the range of 950°C to 1, 070°C, which corresponds to the melting temperature of the bonding member 130, and the main heating temperature Temp₄ is set to a higher temperature than the melting temperature.

While the piston assembly is subjected to the main heating step in the main heating zone Z₂, the bonding member 130 disposed between the first and second piston parts 110 and 120 of the piston assembly is melted and diffused into the first and second piston parts 110 and 120, such that the bonding surfaces 112 and 113 of the first piston part 110 and the bonding surfaces 122 and 123 of the second piston part 120 are reliably brazed to each other.

The cooling zone Z₃ and Z₄ includes a first cooling zone Z₃ and a second cooling zone Z₄ communicating with the first cooling zone Z₃.

The first cooling zone Z₃ communicates with the heating zone Z₁ and Z₂ through the second opening 212, and the piston unit moved to the first cooling zone Z₃ through the second opening 212 is subjected to a first cooling step. The internal temperature of the first cooling zone Z₃ rapidly decreases toward the rear side or the second cooling zone Z₄ from the front side or the second opening 212. That is, the internal temperature of the first cooling zone Z₃ decreases from the main heating temperature Temp₄ to a cooling temperature Temp₅. At this time, the cooling temperature Temp₅ may range from 10°C to 100°C, for example. Therefore, the piston unit is rapidly cooled through the first cooling step.

At this time, in order to rapidly lower the internal temperature of the first cooling zone Z₃, low-temperature cooling gas may be supplied to the first cooling zone Z₃.

The internal temperature of the second cooling zone Z₄ is maintained at a cooling temperature Temp₅, and the piston unit is subjected to a second cooling step in the second cooling zone Z₄. At the second cooling step, the piston unit may be cooled at a lower speed than at the first cooling step. The second cooling zone Z₄ may communicate with the outside through a third opening 213.

The length of the second cooling zone Z₄ in the one direction is larger than the length of the first cooling zone Z₃ in the one direction. Therefore, when the piston unit is moved through the first and second cooling zones Z₃ and Z₄ at the same speed, the second cooling step performed in the second cooling zone Z₄ may be performed for a longer time than the first cooling step. For example, the time during which one piston unit stays in the first cooling zone Z₃ may be two to four times longer than the time during which the same piston unit stays in the second cooling zone Z₄.

In the present embodiment, the cooling zone Z₃ and Z₄ is described as a closed space except the second and third openings 212 and 213. However, the entire cooling zone Z₃ and Z₄ may be formed as an open atmosphere without the third opening 213.

The moving unit 220 moves the piston assembly in one direction, such that the piston assembly is brazed and cooled while being moved through the heating zone Z₁ and Z₂ and the cooling zone Z₃ and Z₄.

The moving unit 220 may include a moving mechanism using a conveyer belt, for example, and have a conveyer belt 221 and power units 222 and 223. The conveyer belt 221 is moved in one direction with the plurality of piston assemblies seated thereon, and the power units 222 and 223 provide a rotational force to move the conveyer belt 221 in the one direction. The conveyer belt 221 according to the present embodiment may be moved at a speed of 5 to 30cm/min, for example.

Between the top surface of the conveyer belt 221 and the piston assembly, a plate-shaped seating member 400 is disposed. Thus, the piston assembly may be stably seated on the seating member 400 while a damage of the piston assembly is prevented.

The piston assembly including the first piston part 110, the bonding member 130 and the second piston part 120, which are sequentially stacked therein, is seated on the conveyer belt 221. That is, the piston assembly, in which the first piston part 110 having the combustion cavity 115 formed therein is positioned at the bottom and the second piston part 120 having the piston skirt 125 and the pin hole 216 formed therein is positioned at the top, is seated on the conveyer belt 221. The boundary surface between the first and second piston parts 110 and 120 may be located at a lower position than the center of gravity of the piston assembly, such that the piston assembly can be more stably transferred.

Meanwhile, when the heating zone Z₁ and Z₂ of the piston manufacturing device 200 is partially opened, the surface of the piston assembly may be oxidized while the piston assembly is subjected to the high-temperature heating step in the opened heating zone Z₁ and Z₂.

Therefore, the piston manufacturing device 200 which performs the method for manufacturing a piston according to the embodiment of the present disclosure further includes a gas mixture supply unit 240. The gas mixture supply unit 240 supplies a gas mixture into the heating zone Z₁ and Z₂, and the gas mixture supplied to the heating zone Z₁ and Z₂ suppresses an oxidation of the piston assemblies moved through the heating zone Z₁ and Z₂, and is discharged to the outside.

The gas mixture supply unit 240 has a supply flow path f₁ that is formed downward from a gas discharge port (not illustrated) disposed between the third and fourth sub main heating zones Z₂₃ and Z₂₄, for example. That is, the supply flow path f₁ of the gas mixture is disposed at the rear of the heating zone Z₁ and Z₂ adjacent to the cooling zone Z₃ and Z₄.

The gas mixture introduced into the heating zone Z₁ and Z₂ may be discharged to the outside through a discharge flow path f₁₁ and f₁₂ in the heating zone Z₁ and Z₂, facing the first and second openings 211 and 212.

The gas mixture may include a gas mixture of nitrogen and hydrogen, for example. In this case, a combustion unit (not illustrated) for removing the hydrogen may be installed at the first and second openings 211 and 212 or the third opening 213. Since nitrogen is an inert gas and hydrogen is a reduction gas, the gas mixture according to the present embodiment may be supplied to the heating zone Z₁ and Z₂, in order to suppress an oxidation of the piston assemblies during the heating process.

In the present embodiment, since the piston assemblies are successively transferred into the piston manufacturing device 200 and then brazed and cooled therein, the productivity can be further improved.

Meanwhile, when the method for manufacturing a piston according to the present embodiment is applied, the matching state of the piston needs to be maintained because the piston assembly is heated and brazed while being moved by the moving unit 220. Hereafter, a configuration for maintaining the matching state of the piston assembly while the piston assembly is moved will be described in detail.

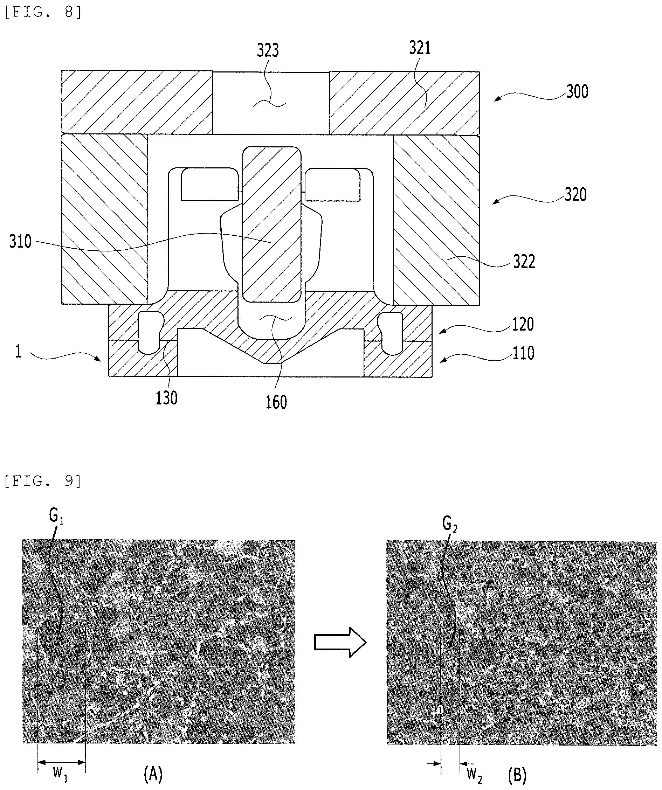

FIG. 8 is a cross-sectional view illustrating that the piston assembly is held by a jig when the piston assembly is seated in the piston manufacturing device of FIG. 6.

Referring to FIG. 8, the piston assembly assembled through the manufacturing method according to the present embodiment is seated on the conveyer belt 221 of the piston manufacturing device 200, and a jig 300 is installed on the piston assembly to press the second piston part 120 against the first piston part 110. Thus, the matching state of the piston assembly may be stably maintained.

The jig 300 includes a first jig 310 and a second jig 320 which are made of a heavy-weight metallic material.

The first jig 310 is disposed at the center hole 160 of the second piston part 120, and presses the second piston part 120 against the first piston part 110.

The second jig 320 includes a second jig body 321 having a through-hole 323 formed therein and a pair of pressing parts 322 which extend downward from both ends of the second jig body 321 and are in contact with one surface of the head part 129 of the second piston part 120. With the second jig 320 installed on the piston assembly, the second jig body 321 is separated at a predetermined distance from the piston assembly. Through the through-hole 323 formed in the second jig body 321, the heat of the heating zone Z₁ and Z₂ may be smoothly transmitted to the piston assembly.

According to the present embodiment, the jig 300 may provide a uniform pressing force for the piston assembly while the first jig 310 of the jig 300 presses the central portion of the piston assembly and the second jig 320 presses the edge portion of the piston assembly.

FIGS. 9A and 9B illustrate the metal texture sizes of the piston before and after the piston manufacturing process by the piston manufacturing device of FIG. 6.

FIG. 9A is an optical microscope image of a metal texture formed at a cross-section of the piston assembly, before the piston 1 according to the present embodiment is subjected to diffusion brazing, and FIG. 9B is an optical microscope image of a metal texture formed at a cross-section of the piston unit, after the piston 1 is subjected to diffusion brazing and cooling.

Referring to FIGS. 9A and 9B, a pearlite structure G₁ in the metal texture formed in the first or second piston part 110 and/or 120 has a grain size corresponding to a first size W₁, before the manufacturing process by the method for manufacturing a piston according to the present embodiment.

After the manufacturing process, a pearlite structure G₂ in the metal texture formed in the piston unit has a grain size corresponding to a second size W₂.

At this time, the first size W₁ is larger than the second size W₂. For example, the first size W₁ ranges from 64 um to 90 um, and the second size W₂ ranges from 32um to 45um.

Furthermore, the hardness of the piston 1 subjected to the manufacturing process by the piston manufacturing method according to the present embodiment has risen by about 2% to 5% from the hardness of the piston assembly before the manufacturing process.

When the piston manufacturing method according to the present embodiment is applied, the particle size of the metal texture of the piston 1 is reduced while the hardness thereof is increased.

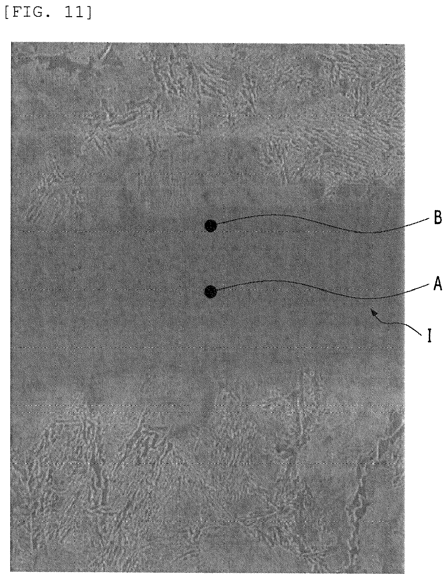

FIG. 10 is a cross-sectional views illustrating the cooling gallery of the piston unit formed by diffusion brazing the piston assembly in the piston manufacturing device of FIG. 6, and FIG. 11 is an expanded view of a portion XI of FIG. 10.

Referring to FIG. 10 and 11, the cooling gallery 140 of the piston 1 manufactured through the manufacturing method according to the present embodiment has a diffusion layer 150 formed on the inner surface thereof, the diffusion layer 150 being formed by diffusion of a portion of the bonding member 130.

The diffusion layer 150 may include a heterogeneous metal made of a nickel-based alloy contained in the bonding member 130. The formation of the diffusion layer 150 on the inner surface of the cooling gallery 140 can improve the heat conductivity and corrosion resistance of the cooling gallery 140.

Meanwhile, the piston body of the piston 1 has a bonding interface I formed in parallel to the top surface of the piston body and passing through the cooling gallery 140.

The bonding interface I is formed through a bonding between the bonding surfaces of the first and second piston parts 110 and 120, as the bonding member 130 is melted and diffused. From the center A of the bonding interface I toward the outside B of the bonding interface I, the concentration of the metal which is different from the material of the piston body formed of steel, for example, nickel decreases.

Table 1 shows data obtained by analyzing the components of the bonding interface of the piston of FIG. 11.

**[Table 1]**

| Location | C (%) | Si (%) | Fe (%) | Ni (%) |
|---|---|---|---|---|
| A | 1.83 | 8.98 | 14.34 | 74.56 |
| B | 1.36 | 2.21 | 42.13 | 54.3 |

That is, when the piston manufacturing method according to the present embodiment is applied, metal diffusion may be smoothly performed at the bonding interface I where the bonding member 130 had been disposed. Therefore, the first and second piston parts 110 and 120 may be stably brazed.

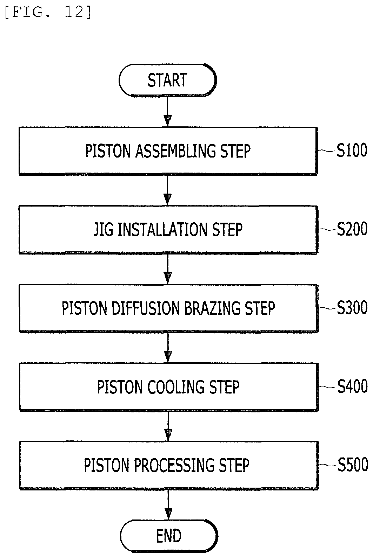

FIG. 12 illustrates a method for manufacturing a piston for a vehicle engine according to an embodiment of the present disclosure.

Referring to FIG. 12, the method for manufacturing a piston for a vehicle engine according to the present embodiment begins with a piston installation step S100 of aligning the first piston part 110, the bonding member 130 and the second piston part 120 to assemble the piston assembly.

Then, the jig 300 is installed on the piston assembly, in order to stably maintain the alignment state of the piston assembly, at a jig installation step S200.

Then, the piston assemblies are seated on the conveyer belt 221 of the piston manufacturing device 200, and successively brazed while being heated in the heating zone Z₁ and Z₂ of the piston manufacturing device 200, at a piston diffusion brazing step S300.

The piston diffusion brazing step S300 includes a preheating step of heating the piston assembly almost to the melting point of the bonding member 130 and a main heating step of heating the piston assembly preheated through the preheating step at a main heating temperature higher than the melting temperature of the bonding member 130, such that the first and second piston parts 110 and 120 are brazed to each other by diffusion of the bonding member 130.

At this time, the main heating temperature is higher than the melting temperature of the bonding member 130 or lower than the melting temperature of the base material, that is, the first and second piston parts 110 and 120.

Then, the piston unit formed by diffusion brazing the piston assembly is cooled at a piston cooling step S400.

The piston cooling step S400 includes a first cooling step of rapidly cooling the piston unit which has been heated to the main heating temperature through the main heating step and a second cooling step of cooling the piston unit cooled through the first cooling step to the cooling temperature.

Then, the locking part 127 protruding toward the combustion cavity 115 of the piston unit which has been completely cooled is removed to process the piston unit, at a piston processing step S500. The piston processing step S500 may include a cutting work, for example. At this time, the piston processing step S500 may also be referred to as a locking part removing step.

Meanwhile, in the present embodiment, the method for manufacturing a piston includes the piston processing step S50 of removing the locking part 127 through a cutting process. However, when the locking part 127 does not protrude to the outside and the assembling of the first and second piston parts 110 and 120 is maintained, the locking part 127 may not be removed at the piston processing step S500.

According to the present embodiment, the piston made of steel can be manufactured through the brazing method. Thus, the upper and lower piston parts can be brazed to each other without flashing.

Furthermore, as the piston manufacturing process is performed under an open atmosphere, the diffusion brazing of the piston can be successively performed to improve the manufacturing efficiency of the piston.

Although various embodiments have been described for illustrative purposes, it will be apparent to those skilled in the art that various changes and modifications may be made without departing from the spirit and scope of the invention.

Hereafter, other embodiments of the present disclosure will be described. The following embodiments have the same configuration as the method for manufacturing a piston for a vehicle engine, which has been described with reference to FIGS. 1 to 12, except the structure of the locking part. Thus, the following descriptions will be focused on the specific characteristics of the present embodiments.

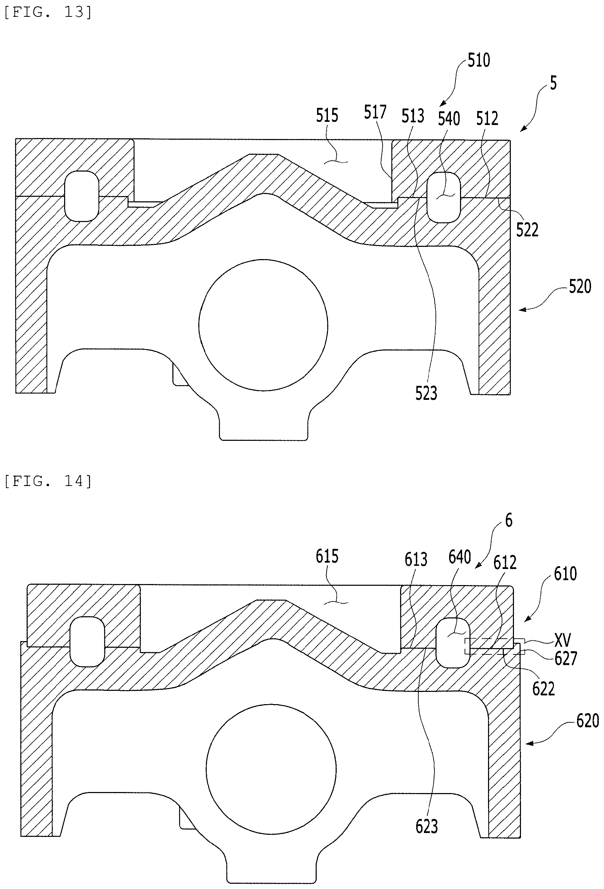

FIG. 13 illustrates that a piston assembly is assembled during a process of manufacturing a piston for a vehicle engine through a method for manufacturing a piston for a vehicle engine according to another embodiment of the present disclosure.

Referring to FIG. 13, a piston 5 which is assembled through an assembling step of the method for manufacturing a piston for a vehicle engine according to the present embodiment includes a first piston part 510 and a second piston part 520. The first and second piston parts 510 and 520 are heated and brazed to each other, with a bonding member (not illustrated) interposed between the first and second piston parts 510 and 520 assembled to each other.

The first piston part 510 includes first and second bonding surfaces 512 and 513 and a first groove disposed between the first and second bonding surfaces 512 and 513, the second piston part 520 includes a third bonding surface 522 facing the first bonding surface 512, a fourth bonding surface 523 facing the second bonding surface 513, and a second groove disposed between the third and fourth bonding surfaces 522 and 523. With the first and second piston parts 510 and 520 welded or brazed to each other, for example, the first and second grooves communicate with each other to form a cooling gallery 540.

The first piston part 510 of the piston 5 according to the present embodiment further includes a locking part 517.

The locking part 517 is formed at the edge of the second bonding surface 513 disposed near the center of the first piston part 510, and protrudes in a direction crossing the plane formed by the second bonding surface 513 or desirably a vertical direction. That is, the locking part 517 is formed at a position closer to the center of the first piston part 510 than the second bonding surface 513, and protrudes in the vertical direction from the first piston part 510 toward the second piston part 520.

With the first and second piston parts 510 and 520 assembled to each other, the locking part 517 covers the inner circumference of the second piston part 520, that is, the circumference adjacent to the fourth bonding surface 523. For example, the locking part 517 may have a ring shape corresponding to a ring shape formed by the circumference adjacent to the second bonding surface 513.

The positions of the first to fourth bonding surfaces 512, 513, 522 and 524 of the piston 5 according to the present embodiment may be exchanged with each other. In other words, the first and third bonding surfaces 512 and 522 of the piston 5 according to the present embodiment are disposed adjacent to the outer circumferences of the first and second piston parts 510 and 520, respectively, and the second and fourth bonding surfaces 513 and 523 are disposed adjacent to the centers of the first and second piston parts 510 and 520, respectively. However, the first and third bonding surfaces 512 and 522 may be disposed adjacent to the centers of the first and second piston parts 510 and 520, respectively, and the second and fourth bonding surfaces 513 and 523 may be disposed adjacent to the outer circumferences of the first and second piston parts 510 and 520, respectively.

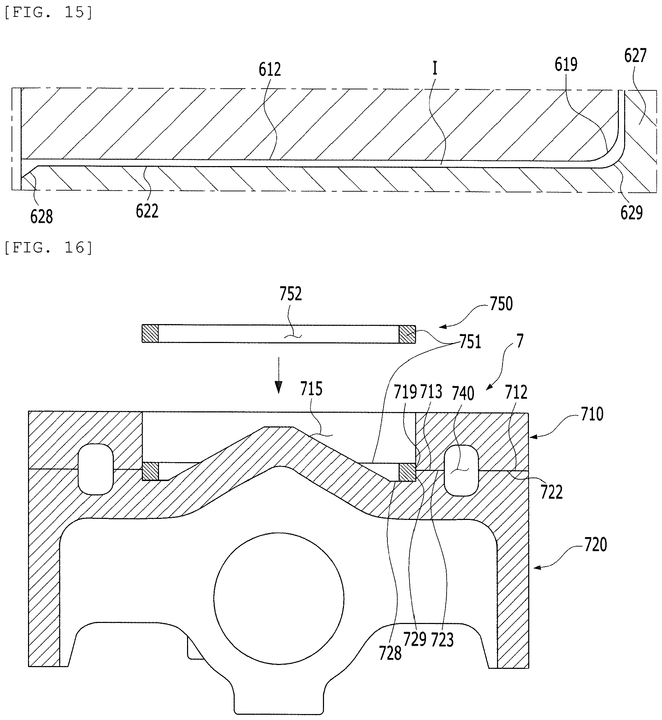

FIG. 14 illustrates that a piston assembly is assembled during a process of manufacturing a piston for a vehicle engine through a method for manufacturing a piston for a vehicle engine according to still another embodiment of the present disclosure, and FIG. 15 is an expanded view of a portion XV of FIG. 14.

Referring to FIG. 14, a piston 6 which is assembled through an assembling step of the method for manufacturing a piston for a vehicle engine according to the present embodiment includes a first piston part 610 and a second piston part 620. The first and second piston parts 610 and 620 are heated and welded to each other, with a bonding member (not illustrated) interposed between the first and second piston parts 610 and 620 assembled to each other.

The first piston part 610 has first and second bonding surfaces 612 and 613 formed thereon, and the second piston part 620 has third and fourth bonding surfaces 622 and 623 formed thereon. With the first and second piston parts 610 and 620 welded to each other, a cooling gallery 640 is formed between the first and second piston parts 610 and 620.

The second piston part 620 further includes a locking part 627.

The locking part 627 is formed at the edge of the third bonding surface 622 disposed at the outer circumference of the second piston part 620, and protrudes in a direction crossing the plane formed by the third bonding surface 622 or desirably a vertical direction. That is, the locking part 627 is formed at a position protruding toward the outer circumference of the second piston part 620 from the third bonding surface 622, and protrudes in the vertical direction from the second piston part 620 toward the first piston part 610.

With the first and second piston parts 610 and 620 assembled to each other, the locking part 627 covers the outer circumferential surface of the first piston part 610, that is, the circumference adjacent to the first bonding surface 612. For example, the locking part 627 may have a ring shape corresponding to a ring shape formed by the circumference adjacent to the third bonding surface 622, that is, the outer circumference of the second piston part 620.

The locking part 627 and the counterpart piston part 610 facing the locking part 627 has a rounded portion and/or cut portion formed at the corners thereof, the cut portion being formed by cutting the corner.

The corners of the locking part 627 of the piston 6 according to the present embodiment and the first piston part 610 facing the locking part 627 may be rounded.

Hereafter, the above-described structure will be described in detail.

Referring to FIG. 15, a bonding interface I is formed between the first and second piston parts 610 and 620 of the piston 6 manufactured through the piston manufacturing method according to the present embodiment. Furthermore, a first rounded portion 629 having a predetermined radius of curvature is formed between the locking part 627 and the third bonding surface 622 of the second piston part 620, and a second rounded portion 619 having a predetermined radius of curvature is formed at an edge corner of the first piston part 610, adjacent to the first bonding surface 612. With the first and second piston parts 610 and 620 assembled or welded to each other, the second rounded portion 619 faces the first rounded portion 629.

The first rounded portion 629 has a different radius of curvature from the second rounded portion 619.

More specifically, the second rounded portion 619 has a larger radius of curvature than the first rounded portion 629. In other words, the second rounded portion 619 has a smaller curvature than the first rounded portion 629.

When the corner portion of the first piston part 610 is in contact with the corner portion of the second piston part 620, the other portions of the first and second piston parts 610 and 620 excluding the corner portions may be relatively separated from each other while the first and second piston parts 610 and 620 are assembled to each other, which makes it possible to degrade the diffusion brazing of the piston 6. Therefore, when the first rounded portion 629 where the locking part 627 of the piston 6 according to the present embodiment is formed has a smaller radius of curvature than the second rounded portion 619, a direct contact between the second rounded portion 619 and the first rounded portion 629 during the diffusion brazing process can be prevented.

Meanwhile, at the other edge of the third bonding surface 622 of the second piston part 620, that is, the opposite corner of the corner where the second rounded portion 619 is formed, a cut portion 628 is obliquely formed.

FIG. 16 illustrates that a piston assembly is assembled during a process of manufacturing a piston for a vehicle engine through a method for manufacturing a piston for a vehicle engine according to still another embodiment of the present disclosure.

Referring to FIG. 16, the piston 7 according to the present embodiment includes a first piston part 710 having first and second bonding surfaces 712 and 713 and a second piston part 720 having third and fourth bonding surfaces 722 and 723, and has a cooling gallery 740 formed between the first and second piston parts 710 and 720. Furthermore, a bonding member (not illustrated) may be disposed between the bonding surfaces 712 and 713 of the first piston part 710 and the bonding surfaces 722 and 723 of the second piston part 720. For convenience of description, however, the description of the bonding member is omitted in FIG. 16.

In the method for manufacturing a piston for a vehicle engine according to the present embodiment, a locking part 750 formed as a separate member which can be detached from the piston 7 maintains a matching state between the first and second piston parts 710 and 720 assembled to each other.

More specifically, the locking part 750 includes a locking part body 751 formed in a ring shape and having a through-hole 752 formed in the center thereof.

The locking part body 751 has an outer diameter corresponding to the inner diameter of a first piston-side bonding surface circumference 719 and a second piston-side bonding surface circumference 729. The first piston-side bonding surface circumference 719 is adjacent to the second bonding surface 713 disposed near the center between the bonding surfaces 712 and 713 of the first piston part 710, and the second piston-side bonding surface circumference 729 is adjacent to the fourth bonding surface 723 disposed at the center between the bonding surfaces 722 and 723 of the second piston part 720.

With the locking part 750 disposed on the piston assembly in which the first piston part 710, the second piston part 720 and the bonding member are assembled to manufacture the piston 7, the outer circumferential surface of the locking part 750 is in contact with the first piston-side bonding surface circumference 719 and the second piston-side bonding surface circumference 729 at the same time.

The locking part 750 is disposed in a combustion cavity 715 formed through the first piston part 710, and seated on a seating surface 728 of the second piston part 720. The seating surface 728 has a shape that is bent with respect to the second piston-side bonding surface circumference 729, while being formed in parallel to the fourth bonding surface 723. That is, the seating surface 728 has a predetermined height difference from the fourth bonding surface 723, and the first piston-side bonding surface circumference 719 is disposed between the seating surface 728 and the fourth bonding surface 723.

According to the present embodiment, since the separable locking part 750 is provided during the manufacturing process of the piston 7, a separate cutting process for removing the locking part 750 is not needed, and the structures of the first and second piston parts 710 and 720 can be simplified.

Meanwhile, according to the method for manufacturing a piston for an engine vehicle of the present embodiment, the locking part 750 can be removed from the piston unit through an operation of overturning a tool such as a separate jig or the welded piston unit or applying a predetermined magnitude of vibration to the piston unit at the piston processing step S500 or the locking part removing step.

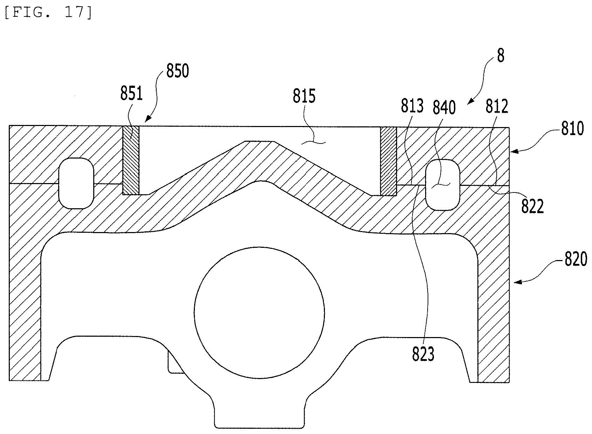

FIG. 17 illustrates that a piston assembly is assembled during a process of manufacturing a piston for a vehicle engine through a method for manufacturing a piston for a vehicle engine according to still another embodiment of the present disclosure.

Referring to FIG. 17, the piston 8 according to the present embodiment includes a first piston part 810 having first and second bonding surfaces 812 and 813 and a second piston part 820 having third and fourth bonding surfaces 822 and 823, and has a cooling gallery 840 formed between the first and second piston parts 810 and 820. The present embodiment is substantially the same as the piston manufacturing method of FIG. 16, except the structure of a locking part 850. Thus, the following descriptions will be focused on the specific characteristics of the present embodiment.

During the process of the piston manufacturing method according to the present embodiment, the outer circumferential surface of a locking part body 851 of the locking part 850 is in contact with first and second piston-side bonding surface circumferences at the same time, and the locking part 850 has a height corresponding to the height of a combustion cavity 815. For example, when the depth of the combustion cavity 815 is larger than the vertical thickness of the first piston part 810 or the height of the first piston part 810, the locking part 850 may have a larger height than the vertical thickness of the first piston part 810.

With the locking part 850 mounted on the piston assembly, the locking part 850 is disposed in the combustion cavity 815 formed through the first piston part 810, and one surface of the locking part body 851 is disposed in parallel to one surface of the first piston part 810. In other words, the one surface of the locking part body 851 forms the same plane as the one surface of the first piston part 810. At this time, the other surface of the locking part body 851 is supported by the second piston part 820.

According to the present embodiment, when the first piston part 810 is inserted and welded in the piston manufacturing device 200 while the one surface of the first piston part 810 is seated on the seating member 400, the one surface of the first piston part 810 and the one surface of the locking part 850 may come in contact with the seating member 400 at the same time. Thus, the piston assembly can be more stably seated on the seating member 400.

Although the representative embodiments of the present disclosure have been disclosed in detail, those having ordinary skill in the field of technology to which the present disclosure pertains would understand that various modifications are possible, without departing from the scope of the present disclosure. Accordingly, the scope of the present disclosure should not be construed as being limited to the described embodiments but be defined by the appended claims.

## Claims

1. A method for manufacturing a piston for a vehicle engine, comprising:
a piston assembling step (S100) of forming a piston assembly by assembling a first piston part (110, 510, 610, 710, 810), a bonding member (130) and a second piston part (120, 520, 620, 720, 820), wherein the first piston part has two or more bonding surfaces (112, 113, 512, 513, 612, 613, 712, 713, 812, 813) separated from each other and extended in a circumferential direction and a first groove between the first and second bonding surfaces for forming a cooling gallery, and the second piston part has two or more bonding surfaces (122, 123, 522, 523, 622, 623, 722, 723, 822, 823) separated from each other and extended in the circumferential direction and a second groove between the third and fourth bonding surfaces for forming said cooling gallery;
a piston diffusion brazing step (S300) of diffusion brazing the first piston part, the bonding member and the second piston part under an open atmosphere by heating the formed piston assembly; and
a piston cooling step (S400) of cooling a piston unit formed by diffusion brazing the first piston part, the bonding member and the second piston part,
wherein the piston assembly comprises a locking part (127, 517, 627, 750, 850) for maintaining a position at which the first and second piston parts are assembled, and
wherein the method further comprises a locking part removing step (S500) of removing the locking part from the cooled piston unit.

2. The method of claim 1, wherein the locking part 42 (127, 517, 627, 750, 850) is formed in any one of the first and second piston parts (110, 510, 610, 710, 810, 120, 520, 620, 720, 820), and protrudes to cover a portion of the piston part where the locking part is not formed.

3. The method of claim 1 or 2, wherein the locking part (127, 517, 750, 850) is disposed at a circumference adjacent to a first bonding surface disposed near the center of the first or second piston part, between the pair of bonding surfaces formed on the first or second piston part, and protrudes in a direction crossing a plane formed by the bonding surface.

4. The method of claim 1 or 2, wherein the locking part (627) is disposed at a circumference adjacent to a second bonding surface separated from a first bonding surface disposed near the center of the first or second piston part, between the pair of bonding surfaces formed on the first or second piston part, and protrudes in a direction crossing a plane formed by the bonding surface.

5. The method of claim 3, wherein a first rounded portion (128, 629) having a predetermined radius of curvature is formed between the locking part and the first or second bonding surface, and
a cut portion (118) formed in an oblique direction or a second rounded portion (619)_having a predetermined radius of curvature is formed at a corner portion of the piston part which faces the first rounded portion and has no locking part formed thereon.

6. The method of claim 5, wherein the second rounded portion (619) has a larger radius of curvature than the first rounded portion (629).

7. The method of any of preceding claims, wherein the locking part (750, 850) is separable from the first and second piston parts,
the locking part (750, 850) comprises a locking part body (751, 851) formed in a ring shape and having a through-hole (752) formed therein,
the locking part body (751, 851) has an outer diameter corresponding to the inner diameter of first and second piston-side bonding surface circumferences, wherein the first piston-side bonding surface circumference is adjacent to a bonding surface disposed near the center between the bonding surfaces of the first piston part (710, 810), and the second piston-side bonding surface circumference is adjacent to a bonding surface disposed near the center between the bonding surfaces of the second piston part (720, 820), and
the outer circumferential surface of the locking part (750, 850) is in contact with the first and second piston-side bonding surface circumferences at the same time, with the locking part disposed in the piston assembly.

8. The method of claim 7, wherein with the locking part (750, 850) mounted on the piston assembly, the locking part (750, 850) is disposed in the combustion cavity (715, 815), wherein one surface of the locking part body (751, 851) is disposed in parallel to one surface of the first piston part (710, 810), and the other surface of the locking part body is supported by the second piston part (720, 820).

9. The method of any of preceding claims, wherein the piston diffusion brazing step (S300) is performed in a piston manufacturing device (200) which includes a partially opened heating zone (Z₁, Z₂), a heater (230) for providing heat into the heating zone, and a moving unit (220) moved in one direction in the heating zone, and
wherein in the piston diffusion brazing step (S300), the piston assembly is heated while being moved at a predetermined speed through the heating zone (Z₁, Z₂) in the one direction by the moving unit (220).

10. The method of any of preceding claims, wherein the piston diffusion brazing step (S300) comprises:
a preheating step of heating the piston assembly formed at room temperature to a preheating temperature from the room temperature, the preheating temperature being lower than the melting temperature of the bonding member (130); and
a main heating step of diffusion brazing the first piston part, the bonding member and the second piston part of the piston assembly by heating the piston assembly heated to the preheating temperature through the preheating step at a main heating temperature higher than the melting temperature of the bonding member (130).

11. The method of claim 9 or 10, insofar as dependent upon claim 9, wherein the second piston part (120, 520, 620, 720, 820) comprises a piston skirt (125) and a piston pin hole (126), and
wherein a plurality of the piston assemblies, each including the first piston part, the bonding member and the second piston part sequentially stacked, are successively moved by the moving unit (220).

12. A piston for a vehicle engine, which is manufactured by the method for manufacturing a piston for a vehicle engine according to any one of preceding claims.

## Patentansprüche

1. Verfahren zur Herstellung eines Kolbens für einen Fahrzeugmotor, umfassend:
einen Kolben-Montageschritt (S100) zum Bilden einer Kolbenanordnung durch Zusammenbauen eines ersten Kolbenteils (110, 510, 610, 710, 810), eines Verbindungselements (130) und eines zweiten Kolbenteils (120, 520, 620, 720, 820), wobei das erste Kolbenteil zwei oder mehr Verbindungsflächen (112, 113, 512, 513, 612, 613, 712, 713, 812, 813), die voneinander getrennt sind und sich in einer Umfangsrichtung erstrecken, und eine erste Nut zwischen der ersten und der zweiten Verbindungsfläche zum Bilden eines Kühlkanals aufweist, und der zweite Kolbenteil zwei oder mehr Verbindungsflächen (122, 123, 522, 523, 622, 623, 722, 723, 822, 823), die voneinander getrennt sind und sich in der Umfangsrichtung erstrecken, und eine zweite Nut zwischen der dritten und der vierten Verbindungsfläche zum Bilden des Kühlkanals aufweist;
einen Kolbendiffusionslötschritt (S300) des Diffusionslötens des ersten Kolbenteils, des Verbindungselements und des zweiten Kolbenteils unter einer offenen Atmosphäre durch Erwärmen der gebildeten Kolbenanordnung; und
einen Kolbenkühlschritt (S400) zum Kühlen einer durch Diffusionslöten des ersten Kolbenteils, des Verbindungselements und des zweiten Kolbenteils gebildeten Kolbeneinheit,
wobei die Kolbenanordnung ein Verriegelungsteil (127, 517, 627, 750, 850) zum Aufrechterhalten einer Position umfasst, in der das erste und das zweite Kolbenteil zusammengebaut sind, und
wobei das Verfahren ferner einen Verriegelungsteil-Entfernungsschritt (S500) zum Entfernen des Verriegelungsteils von der gekühlten Kolbeneinheit umfasst.

2. Verfahren nach Anspruch 1, wobei das Verriegelungsteil (127, 517, 627, 750, 850) in einem der ersten und zweiten Kolbenteile (110, 510, 610, 710, 810, 120, 520, 620, 720, 820) ausgebildet ist und vorsteht, um einen Abschnitt des Kolbenteils abzudecken, an dem das Verriegelungsteil nicht ausgebildet ist.

3. Verfahren nach Anspruch 1 oder 2, wobei das Verriegelungsteil (127, 517, 750, 850) an einem Umfang angrenzend an eine erste Verbindungsfläche, die nahe der Mitte des ersten oder zweiten Kolbenteils angeordnet ist, zwischen dem Paar von Verbindungsflächen, die an dem ersten oder zweiten Kolbenteil ausgebildet sind, angeordnet ist und in einer Richtung vorsteht, die eine durch die Verbindungsfläche gebildete Ebene kreuzt.

4. Verfahren nach Anspruch 1 oder 2, wobei das Verriegelungsteil (627) an einem Umfang angrenzend an eine zweite Verbindungsfläche angeordnet ist, die von einer ersten Verbindungsfläche getrennt ist, die nahe der Mitte des ersten oder zweiten Kolbenteils zwischen dem Paar von Verbindungsflächen angeordnet ist, die auf dem ersten oder zweiten Kolbenteil ausgebildet sind, und in einer Richtung vorsteht, die eine Ebene kreuzt, die von der Verbindungsfläche gebildet wird.

5. Verfahren nach Anspruch 3, wobei ein erster abgerundeter Abschnitt (128, 629) mit einem vorbestimmten Krümmungsradius zwischen dem Verriegelungsteil und der ersten oder zweiten Verbindungsfläche ausgebildet ist, und
ein in einer schrägen Richtung ausgebildeter Schnittabschnitt (118) oder ein zweiter gerundeter Abschnitt (619) mit einem vorbestimmten Krümmungsradius an einem Eckabschnitt des Kolbenteils ausgebildet ist, der dem ersten gerundeten Abschnitt gegenüberliegt und an dem kein Verriegelungsteil ausgebildet ist.

6. Verfahren nach Anspruch 5, wobei die zweite Abrundung (619) einen größeren Krümmungsradius aufweist als die erste Abrundung (629).

7. Verfahren nach einem der vorhergehenden Ansprüche, wobei das Verriegelungsteil (750, 850) von dem ersten und zweiten Kolbenteil trennbar ist,
das Verriegelungsteil (750, 850) einen Verriegelungsteilkörper (751, 851) umfasst, der in einer Ringform ausgebildet ist und ein darin ausgebildetes Durchgangsloch (752) aufweist,
der Verriegelungsteilkörper (751, 851) einen Außendurchmesser aufweist, der dem Innendurchmesser der ersten und zweiten kolbenseitigen Verbindungsflächenumfänge entspricht, wobei der erste kolbenseitige Verbindungsflächenumfang an eine Verbindungsfläche angrenzt, die nahe der Mitte zwischen den Verbindungsflächen des ersten Kolbenteils (710, 810) angeordnet ist, und der zweite kolbenseitige Verbindungsflächenumfang an eine Verbindungsfläche angrenzt, die nahe der Mitte zwischen den Verbindungsflächen des zweiten Kolbenteils (720, 820) angeordnet ist, und die äußere Umfangsfläche des Verriegelungsteils (750, 850) gleichzeitig mit dem ersten und dem zweiten kolbenseitigen Verbindungsflächenumfang in Kontakt ist, wobei das Verriegelungsteil in der Kolbenanordnung angeordnet ist.

8. Verfahren nach Anspruch 7, wobei der an der Kolbenanordnung montierte Verriegelungsteil (750, 850), das Verriegelungsteil (750, 850) in der Verbrennungskavität (715, 815) angeordnet ist, wobei eine Fläche des Verriegelungsteilkörpers (751, 851) parallel zu einer Fläche des ersten Kolbenteils (710, 810) angeordnet ist und die andere Fläche des Verriegelungsteilkörpers vom zweiten Kolbenteil (720, 820) getragen wird.

9. Verfahren nach einem der vorhergehenden Ansprüche, wobei der Kolbendiffusionslötschritt (S300) in einer Kolbenherstellungsvorrichtung (200) durchgeführt wird, die eine teilweise geöffnete Heizzone (Z₁, Z₂), einen Heizer (230) zum Bereitstellen von Wärme in die Heizzone und eine Bewegungseinheit (220), die in eine Richtung in der Heizzone bewegt wird, umfasst, und
wobei in dem Kolbendiffusionslötschritt (S300) die Kolbenanordnung erwärmt wird, während sie von der Bewegungseinheit (220) mit einer vorbestimmten Geschwindigkeit durch die Heizzone (Z₁, Z₂) in der einen Richtung bewegt wird.

10. Verfahren nach einem der vorhergehenden Ansprüche, wobei der Schritt des Kolbendiffusionslötens (S300) umfasst:
einen Vorwärmschritt des Erwärmens der bei Raumtemperatur gebildeten Kolbenanordnung auf eine Vorwärmtemperatur von der Raumtemperatur, wobei die Vorwärmtemperatur niedriger ist als die Schmelztemperatur des Verbindungselements (130); und
einen Haupterwärmungsschritt des Diffusionslötens des ersten Kolbenteils, des Verbindungselements und des zweiten Kolbenteils der Kolbenanordnung durch Erwärmen der auf die Vorwärmtemperatur erwärmten Kolbenanordnung durch den Vorwärmungsschritt auf eine Haupterwärmungstemperatur, die höher ist als die Schmelztemperatur des Verbindungselements (130).

11. Verfahren nach Anspruch 9 oder 10, sofern von Anspruch 9 abhängig, wobei das zweite Kolbenteil (120, 520, 620, 720, 820) einen Kolbenschaft (125) und ein Kolbenbolzenloch (126) aufweist, und
wobei eine Vielzahl der Kolbenanordnungen, die jeweils das erste Kolbenteil, das Verbindungselement und das zweite Kolbenteil aufeinanderfolgend gestapelt umfassen, nacheinander von der Bewegungseinheit (220) bewegt werden.

12. Kolben für einen Fahrzeugmotor, der nach dem Verfahren zur Herstellung eines Kolbens für einen Fahrzeugmotor nach einem der vorhergehenden Ansprüche hergestellt ist.

## Revendications

1. Procédé de fabrication d'un piston pour un moteur de véhicule, comprenant :
une étape d'assemblage de piston (S100) consistant à former un ensemble de piston en assemblant une première partie de piston (110, 510, 610, 710, 810), un élément de liaison (130) et une seconde partie de piston (120, 520, 620, 720, 820), dans laquelle la première partie de piston a deux ou plusieurs surfaces de liaison (112, 113, 512, 513, 612, 613, 712, 713, 812, 813) séparées l'une de l'autre et s'étendant dans une direction circonférentielle et une première rainure entre les première et deuxième surfaces de liaison pour former une galerie de refroidissement, et la deuxième partie du piston a deux ou plusieurs surfaces de liaison (122, 123, 522, 523, 622, 623, 722, 723, 822, 823) séparées l'une de l'autre et s'étendant dans la direction circonférentielle et une deuxième rainure entre les troisième et quatrième surfaces de liaison pour former ladite galerie de refroidissement ;
une étape de brasage par diffusion du piston (S300) consistant à braser par diffusion la première partie du piston, l'élément de liaison et la deuxième partie du piston sous une atmosphère ouverte en chauffant l'ensemble de piston formé ; et
une étape de refroidissement du piston (S400) consistant à refroidir une unité de piston formée par le brasage par diffusion de la première partie du piston, de l'élément de liaison et de la deuxième partie du piston,
dans lequel l'ensemble de piston comprend une partie de verrouillage (127, 517, 627, 750, 850) pour maintenir une position dans laquelle les première et deuxième parties du piston sont assemblées, et
dans lequel le procédé comprend en outre une étape de retrait de la pièce de verrouillage (S500) consistant à retirer la pièce de verrouillage de l'unité de piston refroidie.

2. Le procédé selon la revendication 1, dans lequel la partie de verrouillage (127, 517, 627, 750, 850) est formée dans l'une quelconque des première et deuxième parties de piston (110, 510, 610, 710, 810, 120, 520, 620, 720, 820), et fait saillie pour couvrir une partie de la partie de piston où la partie de verrouillage n'est pas formée.

3. Le procédé selon la revendication 1 ou 2, dans lequel la partie de verrouillage (127, 517, 750, 850) est disposée sur une circonférence adjacente à une première surface de liaison disposée près du centre de la première ou de la deuxième partie de piston, entre la paire de surfaces de liaison formée sur la première ou la deuxième partie de piston, et fait saillie dans une direction croisant un plan formé par la surface de liaison.

4. Le procédé de la revendication 1 ou 2, dans lequel la partie de verrouillage (627) est disposée sur une circonférence adjacente à une deuxième surface de liaison séparée d'une première surface de liaison disposée près du centre de la première ou deuxième partie de piston, entre la paire de surfaces de liaison formée sur la première ou deuxième partie de piston, et fait saillie dans une direction croisant un plan formé par la surface de liaison.

5. Le procédé selon la revendication 3, dans lequel une première partie arrondie (128, 629) ayant un rayon de courbure prédéterminé est formée entre la partie de verrouillage et la première ou la deuxième surface de liaison, et
une partie coupée (118) formée dans une direction oblique ou une deuxième partie arrondie (619) ayant un rayon de courbure prédéterminé est formée à une partie en coin de la partie de piston qui fait face à la première partie arrondie et sur laquelle aucune partie de verrouillage n'est formée.

6. Le procédé de la revendication 5, dans lequel la deuxième partie arrondie (619) a un rayon de courbure plus grand que la première partie arrondie (629).

7. Le procédé de l'une des revendications précédentes, dans lequel la partie de verrouillage (750, 850) est séparable de la première et de la deuxième partie du piston,
la partie de verrouillage (750, 850) comprend un corps de partie de verrouillage (751, 851) formé en forme d'anneau et ayant un trou traversant (752) formé à l'intérieur,
le corps de la pièce de verrouillage (751, 851) a un diamètre extérieur correspondant au diamètre intérieur des première et deuxième circonférences de surface de liaison du côté du piston, dans lequel la première circonférence de surface de liaison du côté du piston est adjacente à une surface de liaison disposée près du centre entre les surfaces de liaison de la première partie de piston (710, 810), et la deuxième circonférence de surface de liaison du côté du piston est adjacente à une surface de liaison disposée près du centre entre les surfaces de liaison de la deuxième partie de piston (720, 820), et
la surface circonférentielle extérieure de la pièce de blocage (750, 850) est en contact avec les première et deuxième circonférences de surface de liaison du côté du piston en même temps, la pièce de blocage étant disposée dans l'ensemble de piston.

8. Le procédé de la revendication 7, dans lequel avec la partie de verrouillage (750, 850) montée sur l'ensemble de piston, la partie de verrouillage (750, 850) est disposée dans la cavité de combustion (715, 815), dans laquelle une surface du corps de la partie de verrouillage (751, 851) est disposée parallèlement à une surface de la première partie de piston (710, 810), et l'autre surface du corps de la partie de verrouillage est supportée par la deuxième partie de piston (720, 820).

9. Le procédé de l'une des revendications précédentes, dans lequel l'étape de brasage par diffusion du piston (S300) est effectuée dans un dispositif de fabrication de piston (200) qui comprend une zone de chauffage partiellement ouverte (Zi, Z₂), un appareil de chauffage (230) pour fournir de la chaleur dans la zone de chauffage, et une unité mobile (220) déplacée dans une direction dans la zone de chauffage, et
dans lequel, dans l'étape de brasage par diffusion du piston (S300), l'ensemble de piston est chauffé tout en étant déplacé à une vitesse prédéterminée à travers la zone de chauffage (Z₁, Z₂) dans une direction par l'unité mobile (220).

10. Le procédé de l'une des revendications précédentes, dans laquelle l'étape de brasage par diffusion du piston (S300) comprend :
une étape de préchauffage consistant à chauffer l'ensemble de piston formé à la température ambiante à une température de préchauffage à partir de la température ambiante, la température de préchauffage étant inférieure à la température de fusion de l'élément de liaison (130) ; et
une étape de chauffage principal consistant à braser par diffusion la première partie du piston, l'élément de liaison et la deuxième partie du piston de l'ensemble de piston en chauffant l'ensemble de piston chauffé à la température de préchauffage par l'étape de préchauffage à une température de chauffage principal supérieure à la température de fusion de l'élément de liaison (130).

11. Le procédé selon la revendication 9 ou 10, dans la mesure où il dépend de la revendication 9, dans lequel la deuxième partie de piston (120, 520, 620, 720, 820) comprend une jupe de piston (125) et un trou d'axe de piston (126), et
dans lequel une pluralité d'ensembles de pistons, comprenant chacun la première partie du piston, l'élément de liaison et la deuxième partie du piston empilés en séquence, sont successivement déplacés par l'unité mobile (220).

12. Un piston pour moteur de véhicule, qui est fabriqué selon le procédé de fabrication d'un piston pour moteur de véhicule selon l'une quelconque des revendications précédentes.
